# EUROPEAN PATENT APPLICATION

(11) **EP 4 800 902 A1**
(43) Date of publication of application: **02.09.2026**
(21) Application number: 25224545.1
(22) Date of filing: 17.12.2025
(51) Int. Cl.: H02M 1/32, H02M 3/155, H02M 3/158, H02P 25/022, H02M 1/44

(54) **SYMMETRIC BUCK CIRCUIT FOR ELECTRICALLY EXCITED SYNCHRONOUS MACHINE**

(30) Priority: 26.02.2025 US 202519064013
(71) Applicant: BorgWarner Luxembourg Automotive Systems S.A., 4940 Bascharage (LU)
(72) Inventor: WACHTER, Georges Leopold Camille, Luxembourg (LU); ENGEL, Joseph A., Oberkorn (LU)
(74) Representative: Office Freylinger

(57) **Abstract**

A power converter includes a first switch including a first connection and a second connection, wherein the first connection of the first switch is configured to be connected to a positive voltage node; a second switch including a first connection and a second connection, wherein the first connection of the second switch is configured to be connected to a negative voltage node; and a diode including an anode and a cathode, wherein the cathode of the diode is connected to the second connection of the first switch and the anode of the diode is connected to the second connection of the second switch; wherein the second connection of the first switch is configured to be connected to a first end of a rotor winding, and the second connection of the second switch is configured to be connected to a second end of the rotor winding.

## Description

### TECHNICAL FIELD

Various embodiments of the present disclosure relate generally to systems and methods for controlling an electrically excited synchronous machine, and, more particularly, to systems and methods including a symmetric buck circuit to reduce parasitic capacitance in a power converter for an electric vehicle.

### BACKGROUND

Power converters, such as inverters and chargers, are used to drive a motor in an electric vehicle, for example, and are responsible for converting High Voltage Direct Current (HVDC) into Alternating Current (AC) to drive the motor. A switching device for an electrically excited synchronous machine (EESM) may be used as a drive in a hybrid or electric vehicle. The switching device may generate high voltage swings or parasitic currents, which may cause inefficiencies or damage the EESM.

The present disclosure is directed to overcoming one or more of these above-referenced challenges.

### SUMMARY OF THE DISCLOSURE

In some aspects, the techniques described herein relate to a system including a power converter, wherein the power converter includes: a first switch including a first connection and a second connection, wherein the first connection of the first switch is configured to be connected to a positive voltage node; a second switch including a first connection and a second connection, wherein the first connection of the second switch is configured to be connected to a negative voltage node; and a diode including an anode and a cathode, wherein the cathode of the diode is connected to the second connection of the first switch and the anode of the diode is connected to the second connection of the second switch; wherein the second connection of the first switch is configured to be connected to a first end of a rotor winding, and the second connection of the second switch is configured to be connected to a second end of the rotor winding.

In some aspects, the techniques described herein relate to a system, wherein the first switch and the second switch include one or more of a field-effect transistor (FET) or an insulated-gate bipolar transistor (IGBT).

In some aspects, the techniques described herein relate to a system, wherein the first switch and the second switch are configured to be selectively operable to remove a parasitic current on the rotor winding.

In some aspects, the techniques described herein relate to a system, wherein the first switch and the second switch are configured to be selectively operable to reduce one or more of a voltage or a current delivered to a bearing.

In some aspects, the techniques described herein relate to a system, wherein the power converter further includes: a recirculation circuit configured to recirculate a parasitic current in the power converter when the first switch and the second switch are both in an off position, and a clamping circuit configured to regulate a voltage in the power converter.

In some aspects, the techniques described herein relate to a system, wherein the power converter further includes: a filter circuit configured to reduce an output of one or more of a noise or a ripple effect in the power converter.

In some aspects, the techniques described herein relate to a system, wherein the power converter further includes: a third switch including a first connection and a second connection, wherein the first connection of the third switch is connected to the second connection of the second switch and the second connection of the third switch is connected to the second end of the rotor winding; and a second diode including an anode and a cathode, wherein the cathode of the second diode is connected to the positive voltage node and the anode of the second diode is connected to the second connection of the third switch.

In some aspects, the techniques described herein relate to a system, wherein the power converter further includes: a third switch including a first connection and a second connection, wherein the first connection of the third switch is connected to the second connection of the second switch and the second connection of the third switch is connected to the second end of the rotor winding; and a double ended diode including a first end and a second end, wherein the first end of the double ended diode is connected to the first end of the rotor winding and the second end of the double ended diode is connected to the second end of the rotor winding.

In some aspects, the techniques described herein relate to a system, wherein the power converter further includes: a third switch including a first connection and a second connection, wherein the first connection of the third switch is connected to the second connection of the second switch and the second connection of the third switch is connected to the second end of the rotor winding; a second diode including an anode and a cathode, wherein the anode of the second diode is connected to the second end of the rotor winding; and an energy management component including a first connection and a second connection, wherein the second connection of the energy management component is connected to the first end of the rotor winding; wherein the second connection of the energy management component is connected to the cathode of the second diode, wherein the energy management component is configured to store a magnetic energy discharged from the rotor winding.

In some aspects, the techniques described herein relate to a system, wherein the power converter further includes: a clamping component including a first end and a second end, wherein the first end of the clamping component is connected to the first end of the rotor winding and wherein the second end of the clamping component is connected to the second connection of the second switch; and an igniter component including a first connection and a second connection, wherein the first connection of the igniter component is connected to the cathode of the diode and the second connection of the igniter component is connected to the second end of the rotor winding.

In some aspects, the techniques described herein relate to a system, wherein the power converter further includes: a clamping component including a first connection and a second connection, wherein the first connection of the clamping component is connected to the first end of the rotor winding and wherein the second connection of the clamping component is connected to the second end of the rotor winding.

In some aspects, the techniques described herein relate to a system, the system further includes: a battery configured to supply DC power to the power converter; and a motor configured to receive AC power from the power converter to drive the motor, wherein the system is provided as a vehicle including the power converter, the battery, and the motor.

In some aspects, the techniques described herein relate to a system including a power converter, wherein the power converter includes: a first switch including a first connection and a second connection, wherein the first connection of the first switch is configured to be connected to a positive voltage node; a second switch including a first connection and a second connection, wherein the first connection of the second switch is configured to be connected to a negative voltage node; and a third switch including a first connection and a second connection, wherein the first connection of the third switch is connected to the second connection of the first switch and the second connection of the third switch is connected to the second connection of the second switch, wherein the second connection of the first switch is configured to be connected to a first end of a rotor winding, and the second connection of the second switch is configured to be connected to a second end of the rotor winding.

In some aspects, the techniques described herein relate to a system, wherein the power converter further includes: a filter circuit configured to reduce an output of one or more of a noise or a ripple effect on the rotor winding.

In some aspects, the techniques described herein relate to a system, wherein the power converter further includes: a clamping circuit including a first diode and a second diode, wherein the first diode includes an anode connected to a second end of a rotor and a cathode connected to a first end of the rotor, wherein the clamping circuit is configured to regulate a voltage in the power converter.

In some aspects, the techniques described herein relate to a method including: operating a first switch of a power converter, a second switch of the power converter, and a third switch of the power converter to control a current in a rotor winding through a first diode connected to the first switch, the second switch, the third switch, and a second diode connected to the first switch and the third switch.

In some aspects, the techniques described herein relate to a method, wherein the operating the first switch, the second switch, and the third switch includes: operating the first switch, the second switch, and the third switch to be closed to pass current from a positive voltage node through the first switch, the rotor winding, the third switch, and the second switch to a negative voltage node during a Pulse Width Modulation on pulse.

In some aspects, the techniques described herein relate to a method, wherein the operating the first switch, the second switch, and the third switch includes: operating the first switch and the second switch to be open, and operating the third switch to be closed, to circulate current through the rotor winding, the third switch, and the first diode during a Pulse Width Modulation off pulse.

In some aspects, the techniques described herein relate to a method, wherein the operating the first switch, the second switch, and the third switch includes: operating the first switch, the second switch, and the third switch to be closed to pass current from a negative voltage node through the second switch, the first diode, the rotor winding, and the second diode to a positive voltage node.

In some aspects, the techniques described herein relate to a method, wherein the operating the first switch, the second switch, and the third switch includes operating the first switch, the second switch, and the third switch in each of a driving operation, a recirculating operation, and a clamping operation.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a vehicle including a power converter, according to one or more embodiments.
FIG. 2 depicts an exemplary system infrastructure for a power converter, according to one or more embodiments.
FIG. 3 depicts an exemplary system infrastructure for a controller, according to one or more embodiments.
FIG. 4 depicts an electrical schematic of a symmetric buck circuit, according to one or more embodiments.
FIG. 5 depicts voltage outputs from a symmetric buck circuit, according to one or more embodiments.
FIG. 6 depicts an exemplary topology diagram, according to one or more embodiments.
FIGS. 7A, 7B, 7C, 7D, and 7E depict exemplary circuits with additional components included, according to one or more embodiments.
FIGS. 8A, 8B, and 8C depict an exemplary current path, according to one or more embodiments.
FIG. 9 depicts an exemplary circuit diagram with a separate clamp and filter, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. For example, in the context of the disclosure, the switching devices may be described as switches or devices, but may refer to any device for controlling the flow of power in an electrical circuit. For example, switches may be metal-oxide-semiconductor field-effect transistors (MOSFETs), bipolar junction transistors (BJTs), insulated-gate bipolar transistors (IGBTs), or relays, for example, or any combination thereof, but are not limited thereto.

Various embodiments of the present disclosure relate generally to systems and methods for controlling an electrically excited synchronous machine, and, more particularly, to systems and methods including a symmetric buck circuit to reduce parasitic capacitance in a power converter for an electric vehicle.

Power converters, such as inverters and chargers, are used to drive a motor in an electric vehicle, for example, and are responsible for converting High Voltage Direct Current (HVDC) into Alternating Current (AC) to drive the motor. The presence of a switching device for an electrically excited synchronous machine (EESM) may be used as a drive in a hybrid or electric vehicle. A rotor current may be controlled using an asymmetric full bridge. The rotor may include slip-rings for power supply of the windings and may be contacted and supplied with electrical energy through carbon brushes. A common control method is a pulse-width modulated control to one or both transistors in a way that current recirculates during off-time through one of the transistors and a diode, or alternately, both transistors may be switched at the same time.

Another way to supply the rotor may include a classic buck stage, which may be a simpler concept that may not support a rapid demagnetization, and may lack redundancy. The disadvantage of switching both transistors of a H-bridge at the same time may include a high ripple current on the machine as the rotor is driven by the positive and negative voltage. The voltage may be inverted based on the pulse width modulated (PWM) signal. The high voltage swing may also create a challenge for designing electromagnetic compatibility (EMC) filters.

Switching a single transistor at a time may allow for driving substantially zero voltage by the recirculating in the bridge, either through a first portion (e.g., a first transistor and a first diode) of the classic buck or through a second portion (e.g., a second transistor and a second diode) of the classic buck, which may yield in a lower current ripple. The disadvantage of switching one transistor of an H-bridge at a given time may include the voltage on only one output changes while the other one stays constant during the switching event, which may drive considerable current through parasitic caps and/or through parasitic caps in the windings. This may also create disadvantages in designing filters. The classic buck circuit may include similar problems when the voltage on the motor terminals changes while the other stays constant causing bearing currents.

These currents may lead to high bearing currents and cause bearing damage. High-frequency current may lead to disadvantages in the EMC. In addition, these effects may lead to a failure to meet EMC requirements. Using some EMC filters may additionally weaken this effect but not completely fix them.

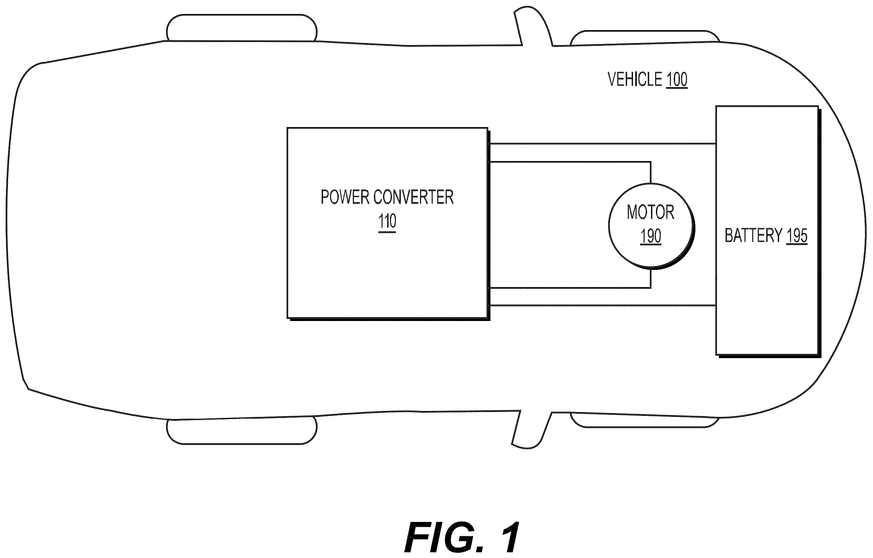

FIG. 1 depicts an exemplary system infrastructure for a vehicle including a power converter, according to one or more embodiments. In the context of this disclosure, an inverter without a converter, or a combined inverter and converter, may be referred to as a power converter 110. As shown in FIG. 1, electric vehicle 100 may include a power converter 110, a motor 190, and a battery 195. The power converter 110 may include components to receive electrical power from an external source and output electrical power to charge the battery 195 of electric vehicle 100. The power converter 110 may convert DC power from the battery 195 in electric vehicle 100 to AC power, to drive (e.g. rotate) the motor 190 of the electric vehicle 100, for example, but the embodiments are not limited thereto. The power converter 110 may be bidirectional, and may convert DC power to AC power, or convert AC power to DC power, such as during regenerative braking, for example. The power converter 110 may be a three-phase inverter, a single-phase inverter, or a multi-phase inverter.

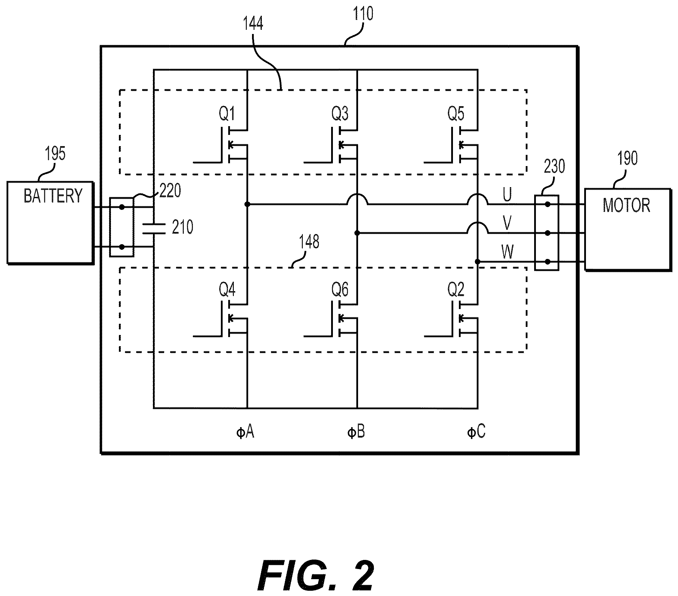

FIG. 2 depicts an electrical power schematic of a three phase inverter module, according to one or more embodiments. Power converter 110 may be used to convert DC power from battery 195 in electric vehicle 100 to AC power, to drive motor 190 of electric vehicle 100, for example, but embodiments are not limited thereto. Additionally, power converter 110 may be bidirectional, and used to convert DC power to AC power, or to convert AC power to DC power. The power converter 110 in FIG. 2 is only exemplary.

Power converter 110 may be connected to battery 195 (e.g., DC power supply) and motor 190. Power converter 110 may include upper phase switches 144 and lower phase switches 148. A first phase (ΦA) may include switches Q1 and Q4, a second phase (ΦB) may include switches Q3 and Q6, and a third phase (ΦC) may include switches Q5 and Q2. Upper phase switches 144 may include first phase switch Q1, second phase switch Q3, and third phase switch Q5. Lower phase switches 148 may include first phase switch Q4, second phase switch Q6, and third phase switch Q2. Switches Q1-Q6 may be metal-oxide-semiconductor field-effect transistors (MOSFET), for example, but embodiments are not limited thereto.

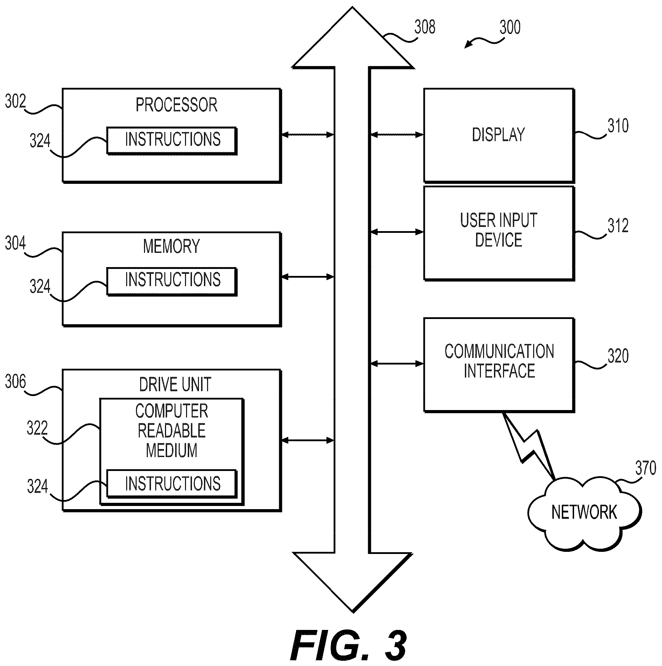

Upper phase switches 144 and lower phase switches 148 may be driven by a PWM signal generated by controller 300 (shown in FIG. 3) to convert DC power delivered via the set of input terminals 220 at bulk capacitor 210 to three phase AC power at outputs U, V, and W (correlating with phases A, B, and C, respectively) via the set of output terminals 230 to motor 190. Additionally, although FIG. 2 depicts a three-phase inverter, the disclosure is not limited thereto, and may include single phase or multi-phase or multi-level inverters. Power converter 110 may include an excitation supply (not shown) connected to one or more switches and the motor 190.

FIG. 3 depicts an exemplary system infrastructure for a controller, according to one or more embodiments. The controller 300 may include one or more controllers. The controller 300 may include a set of instructions that can be executed to cause the controller 300 to perform any one or more of the methods or computer based functions disclosed herein. The controller 300 may operate as a standalone device or may be connected, e.g., using a network, to other computer systems or peripheral devices.

In a networked deployment, the controller 300 may operate in the capacity of a server or as a client in a server-client user network environment, or as a peer computer system in a peer-to-peer (or distributed) network environment. The controller 300 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 300 can be implemented using electronic devices that provide voice, video, or data communication. Further, while the controller 300 is illustrated as a single system, the term "system" shall also be taken to include any collection of systems or sub-systems that individually or jointly execute a set, or multiple sets, of instructions to perform one or more computer functions.

As shown in FIG. 3, the controller 300 may include a processor 302, e.g., a central processing unit (CPU), a graphics processing unit (GPU), or both. The processor 302 may be a component in a variety of systems. For example, the processor 302 may be part of a standard inverter. The processor 302 may be one or more general processors, digital signal processors, application specific integrated circuits (ICs), field programmable gate arrays, servers, networks, digital circuits, analog circuits, combinations thereof, or other now known or later developed devices for analyzing and processing data. The processor 302 may implement a software program, such as code generated manually (e.g., programmed).

The controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits (ICs), firm-ware, micro-code and the like, operating alone or in combination. Likewise, processing strategies may include multiprocessing, multitasking, parallel processing and the like.

As shown, the controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the controller 300 may include an input device 312 configured to allow a user to interact with any of the components of the controller 300. The input device 312 may be a number pad, a keyboard, or a cursor control device, such as a mouse, or a joystick, touch screen display, remote control, or any other device operative to interact with the controller 300.

The controller 300 may also or alternatively include drive unit 306 implemented as a disk or optical drive. The drive unit 306 may include a computer-readable medium 322 in which one or more sets of instructions 324, e.g. software, can be embedded. Further, the instructions 324 may embody one or more of the methods or logic as described herein. The instructions 324 may reside completely or partially within the memory 304 and/or within the processor 302 during execution by the controller 300. The memory 304 and the processor 302 also may include computer-readable media as discussed above.

In some systems, the computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in controller 300, or combinations thereof. The connection with the network 370 may be a physical connection, such as a wired Ethernet connection or may be established wirelessly as discussed below. Likewise, the additional connections with other components of the controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits (ICs), programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit (IC). Accordingly, the present system encompasses software, firmware, and hardware implementations.

The controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component or object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the operations of methods discussed are performed in one embodiment by an appropriate processor (or processors) of a processing (e.g., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

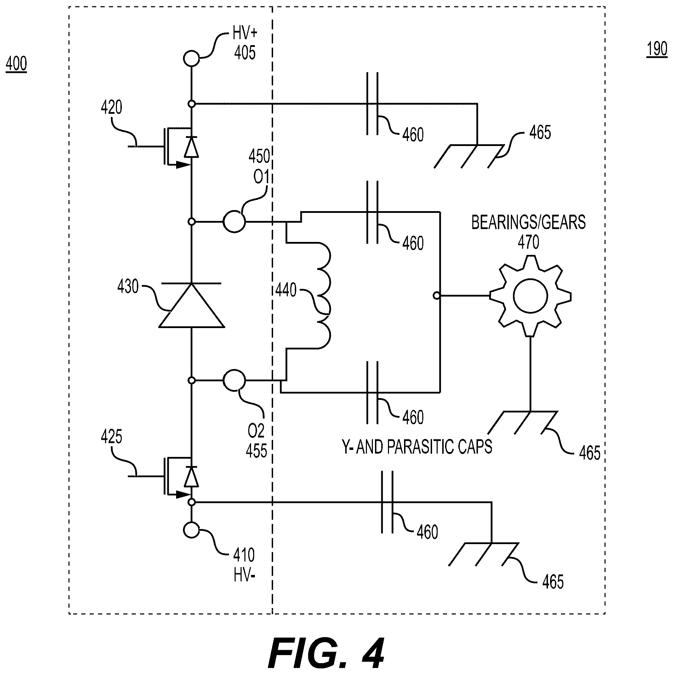

FIG. 4 depicts an electrical schematic of a symmetric buck circuit, according to one or more embodiments. A symmetric buck circuit 400 may include a positive voltage node 405, a negative voltage node 410, a first switch 420, a second switch 425, a diode 430, a first rotor connector 450, and a second rotor connector 455. Symmetric buck circuit 400 may be configured to connect to a motor 190. Motor 190 may include rotor winding 440, one or more parasitic capacitors 460, one or more ground connections 465, and bearings 470.

The first switch 420 may include a first connection and a second connection. The first connection of the first switch 420 may be connected to the positive voltage node 405. The second switch 425 may include a first connection and a second connection. The first connection of the second switch 425 may be connected to the negative voltage node 410. The first switch 420 and the second switch 425 may include field-effect transistors (FET) or insulated-gate bipolar transistors, for example. The first switch 420 and the second switch 425 may be configured to be selectively operable to remove a parasitic current on the rotor winding 440. The first switch 420 and the second switch 425 may be configured to be selectively operable to reduce voltage and/or current delivered to bearings 470.

The diode 430 may include an anode and a cathode. The cathode of the diode 430 may be connected to the second connection of the first switch 420 and the anode of the diode 430 may be connected to the second connection of the second switch 425. The second connection of the first switch 420 may be connected to first rotor connector 450, and may be configured to be connected to a first end of the rotor winding 440. The second connection of the second switch 425 may be connected to second rotor connector 455, and may be configured to be connected to a second end of the rotor winding 440. Diode 430 may be one or more of a diode or a transistor, for example.

The symmetric buck circuit 400 may be connected to or may be part of motor 190. The one or more parasitic capacitors 460 may be configured to reduce the parasitic capacitance before reaching the bearings 470.

The symmetric buck circuit 400 may provide an advantage to asymmetric buck circuits by driving no or substantially reduced common mode voltage on the rotor winding 440 to limit the current on the bearings 470. Current that may be driven through the one or more parasitic capacitors 460 may be reduced in the rotor winding 440. Reducing the current through the one or more parasitic capacitors 460 may address the disadvantages of bearing current and EMC. The first switch 420 and the second switch 425 may be selectively operated at the same or substantially the same time under normal operating conditions. Advantages of the symmetric buck circuit 400 may include a more simplified and cost-effective circuit compared to asymmetric full-bridge circuits.

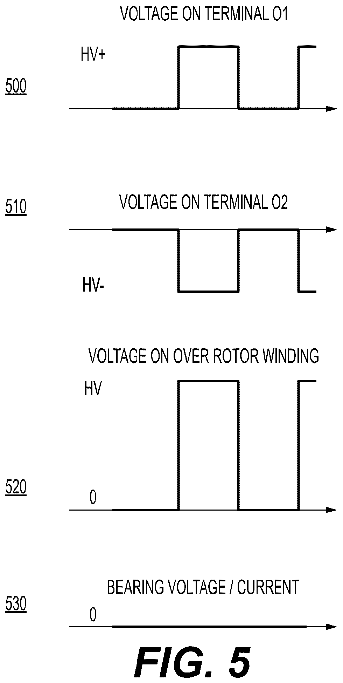

FIG. 5 depicts voltage outputs from a symmetric buck circuit, according to one or more embodiments. Voltage output 500 may represent a voltage on the first rotor connector 450 with respect to the positive voltage node 405. Voltage output 510 may represent a voltage on the second rotor connector 455 with respect to the negative voltage node 410. Voltage output 520 may represent a voltage on rotor winding 440. Voltage output 530 may represent a voltage and/or current on the bearings 470. When the first switch 420 and the second switch 425 are operating under normal conditions, the voltage outputs discussed herein, the parasitic capacitance may be spread over the coil and capacitors located nearer to one connector (e.g., first switch 420) and may reduce the current from capacitors nearer to the other connector (e.g., second switch 425) as they drive opposite currents. This may reduce bearing voltage and current, as depicted by the zero (or approximately zero) voltage and/or current depicted in voltage output 530.

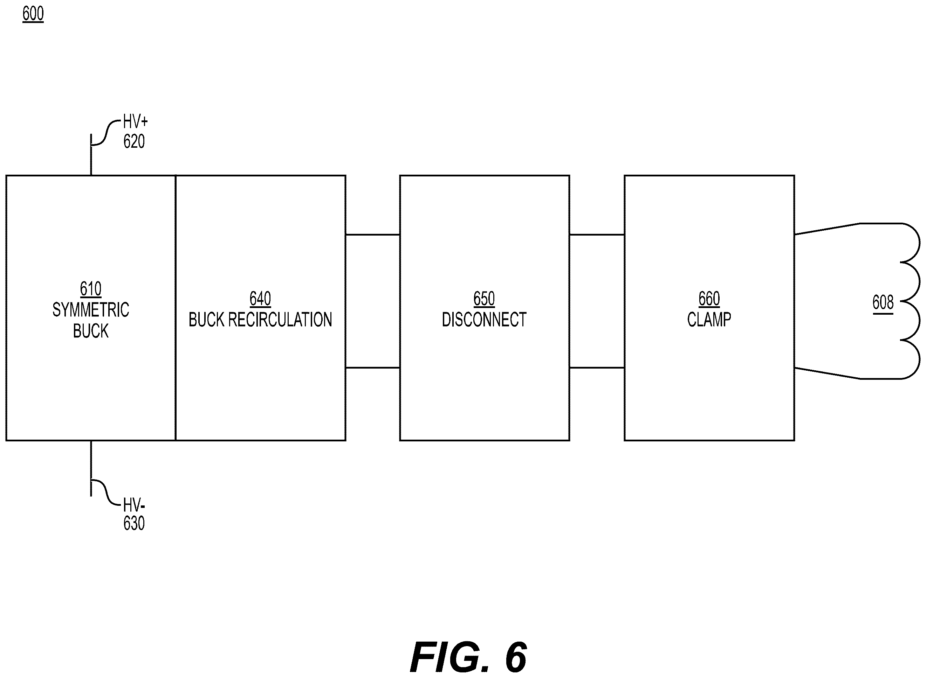

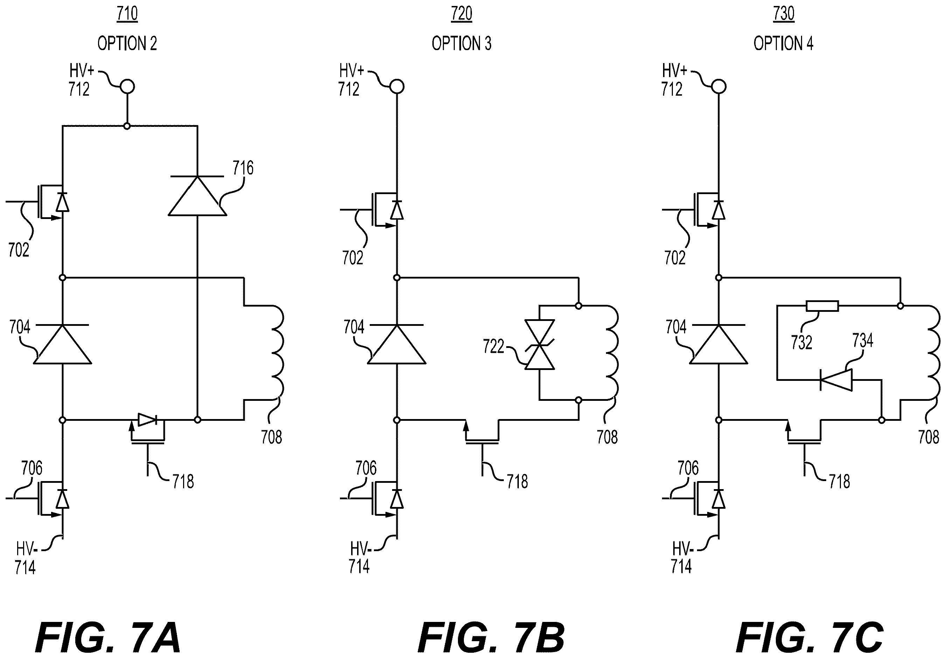

FIG. 6 depicts an exemplary topology diagram, according to one or more embodiments. Topology diagram 600 may include a symmetric buck circuit 610, a positive voltage node 620, a negative voltage node 630, a buck recirculation circuit 640, a disconnect circuit 650, a clamp circuit 660, and rotor winding 608. The symmetric buck circuit 610 may be substantially similar to the symmetric buck circuit 400 described above with respect to FIG. 4. The symmetric buck circuit 610 may correspond to the first switch 420 and the second switch 425 of FIG. 4. The buck recirculation circuit 640 may correspond to diode 430 and may be configured so that recirculation may be integrated in the symmetric buck circuit 610. The buck recirculation circuit 640 may be configured to be switched to cause the coil to produce a high negative voltage in a transistor (e.g., first switch 420 or second switch 425) when switched off. The disconnect circuit 650, for example the third switch 718 as described below with respect to FIGS. 7A, 7B, and 7C, may be configured to disconnect an input voltage (e.g., positive voltage node 405) from a transistor (e.g., first switch 420) allowing the stored energy in the circuit (e.g., symmetric buck circuit 400) to be released to the load through the diode 430 or another transistor (e.g., second switch 425) during the "off" cycle, creating a lower output voltage than input voltage. The disconnect circuit 650 may be configured to disconnect the rotor winding 608 to avoid recirculating its current through the buck recirculation circuit 640. The clamp circuit 660 may be configured to regulate a voltage and reduce voltage ringing in the circuit, for example, the clamp circuit 660 may deal with the energy stored in the rotor winding 608 (e.g., 716, 722, and/or the combination of 732 and 734). The buck recirculation circuit 640, the disconnect circuit 650, and the clamp circuit 660 may be added to the symmetric buck circuit 610 allowing for negative voltages to be placed on the rotor coil.

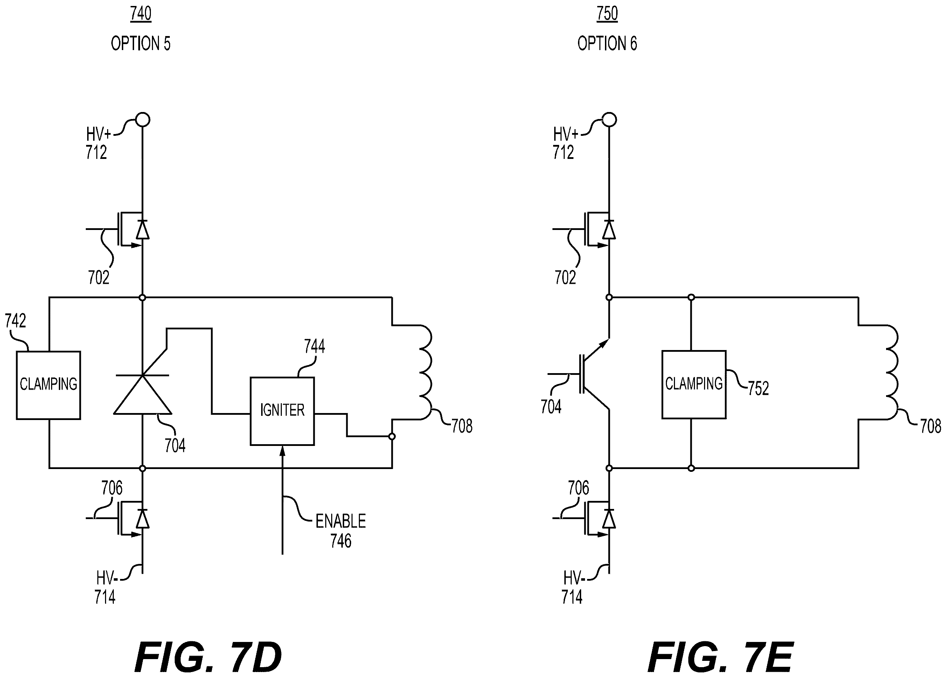

FIGS. 7A, 7B, 7C, 7D, and 7E depict exemplary circuits with additional components included, according to one or more embodiments. FIG. 7A depicts a symmetric buck circuit 710 for a rotor winding 708. The symmetric buck circuit 710 may be substantially similar to the symmetric buck circuit 400 as described above with respect to FIG. 4. However, the symmetric buck circuit 710 may include additional details described herein. The symmetric buck circuit 710 may include a first switch 702, a first diode 704, a second switch 706, a positive voltage node 712, a negative voltage node 714, a second diode 716, and a third switch 718. The first switch 702, the first diode 704, and the second switch 706 may be substantially similar to the first switch 420, the diode 430, and the second switch 425 of the symmetric buck circuit 400 as described above with respect to FIG. 4.

The first switch 702 may include a first connection and a second connection. The first connection of the first switch 702 may be connected to the positive voltage node 712. The second switch 706 may include a first connection and a second connection. The first connection of the second switch 706 may be connected to the negative voltage node 714. The first diode 704 may include an anode and a cathode. The cathode of the first diode 704 may be connected to the second connection of the first switch 702 and the anode of the first diode 704 may be connected to second connection of the second switch 706. The second connection of the first switch 702 may be configured to be connected to a first end of the rotor winding 708, and the second connection of the second switch 706 may be configured to be connected to a second end of the rotor winding 708.

The third switch 718 may include a first connection and a second connection. The first connection of the third switch 718 may be connected to the second connection of the second switch 706 and the second connection of the third switch 718 may be connected to the second end of the rotor winding 708. The second diode 716 may include an anode and a cathode. The cathode of the second diode 716 may be connected to the positive voltage node 712 and the anode of the second diode 716 may be connected to second connection of the third switch 718.

The inclusion of the second diode 716 and the third switch 718 in the symmetric buck circuit 710 may provide a recirculation configuration configured to limit the voltage applied to the rotor winding 708 when one or more switches (e.g., first switch 702 and second switch 706) are in the "off" position. The inclusion of the second diode 716 and the third switch 718 in the symmetric buck circuit 710 may provide a clamping configuration to remove and/or reduce the current that may be applied to the rotor winding 708 when all the switches (e.g., first switch 702, second switch 706, and third switch 718) are in the "off" position.

FIG. 7B depicts a symmetric buck circuit 720 for a rotor winding 708. The symmetric buck circuit 720 may be substantially similar to the symmetric buck circuit 710 as described above with respect to FIG. 7A. However, the symmetric buck circuit 720 may include additional details described herein. The symmetric buck circuit 720 may include the first switch 702, the first diode 704, the second switch 706, the positive voltage node 712, the negative voltage node 714, the third switch 718, and a double ended diode 722.

The third switch 718 may include a first connection and a second connection. The first connection of the third switch 718 may be connected to the second connection of the second switch 706 and the second connection of the third switch 718 may be connected to the second end of the rotor winding 708. The double ended diode 722 may include a first end and a second end. The first end of the double ended diode 722 may be connected to the first end of the rotor winding 708 and the second end of the double ended diode 722 may be connected to the second end of the rotor winding 708. The double ended diode 722 may be configured to recirculate one or more of a voltage or current on the rotor winding 708. The third switch 718 may be configured to disconnect the rotor winding 708 allowing the stored energy in the symmetric buck circuit 720 to be released either through the first diode 704 or the double ended diode 722 during the "off" cycle, creating a lower output voltage than input voltage. The double ended diode 722 may be configured to regulate a voltage and reduce voltage ringing in the circuit.

FIG. 7C depicts a symmetric buck circuit 730 of a rotor winding 708. The symmetric buck circuit 730 may be substantially similar to the symmetric buck circuit 710 as described above with respect to FIG. 7A. However, the symmetric buck circuit 730 may include additional details described herein. The symmetric buck circuit 730 may include the first switch 702, the first diode 704, the second switch 706, the positive voltage node 712, the negative voltage node 714, the third switch 718, a second diode 734, and an energy management component 732.

The third switch 718 may include a first connection and a second connection. The first connection of the third switch 718 may be connected to the second connection of the second switch 706 and the second connection of the third switch 718 may be connected to the second end of the rotor winding 708. The second diode 734 may include an anode and a cathode. The anode of the second diode 734 may be connected to the second end of the rotor winding 708. The energy management component 732 may include a first connection and a second connection. The second connection of the energy management component 732 may be connected to the first end of the rotor winding 708. The second connection of the energy management component 732 may be connected to the cathode of the second diode 734. The energy management component 732 may be configured to dissipate a magnetic energy discharging from the rotor winding 708 via the second diode 734 to thermal energy. The energy management component 732 may be configured to store and/or recirculate the magnetic energy for an alternative use. For example, the energy management component 732 may include a power resistor with thermal management, (e.g., cooling). The energy management component 732 may be configured to buffer the magnetic energy and return the magnetic energy for energizing to a higher magnetic field in the rotor winding 708 or return the magnetic energy to battery 195.

FIG. 7D depicts a symmetric buck circuit 740 of a rotor winding 708. The symmetric buck circuit 740 may be substantially similar to the symmetric buck circuit 710 as described above with respect to FIG. 7A. However, the symmetric buck circuit 740 may include additional details described herein. The symmetric buck circuit 740 may include the first switch 702, the first diode 704, the second switch 706, the positive voltage node 712, the negative voltage node 714, a second diode 734, a clamping component 742, an igniter component 744, and an enable 746.

The clamping component 742 may include a first end and a second end. The first end of the clamping component 742 may be connected to the first end of the rotor winding 708. The second end of the clamping component 742 may be connected to the second connection of the second switch 706. The igniter component 744 may include a first connection and a second connection. The first connection of the igniter component 744 may be connected to the cathode of the first diode 704 and the second connection of the igniter component 744 may be connected to the second end of the rotor winding 708. The enable 746 may be a signal from controller 300, and may be configured to enable the igniter component 744, to establish an electric field in rotor winding 708, for example.

FIG. 7E depicts a symmetric buck circuit 750 of a rotor winding 708. The symmetric buck circuit 750 may be substantially similar to the symmetric buck circuit 710 as described above with respect to FIG. 7A. However, the symmetric buck circuit 750 may include additional details described herein. The symmetric buck circuit 750 may include the first switch 702, the first diode 704, the second switch 706, the positive voltage node 712, the negative voltage node 714, and a clamping component 752. The first diode 704 of the symmetric buck circuit 750 may be configured as a transistor (e.g., FET or IGBT).

The clamping component 752 may include a first connection and a second connection. The first connection of the clamping component 752 may be connected to the first end of the rotor winding 708 and the second connection of the clamping component 752 may be connected to the second end of the rotor winding 708.

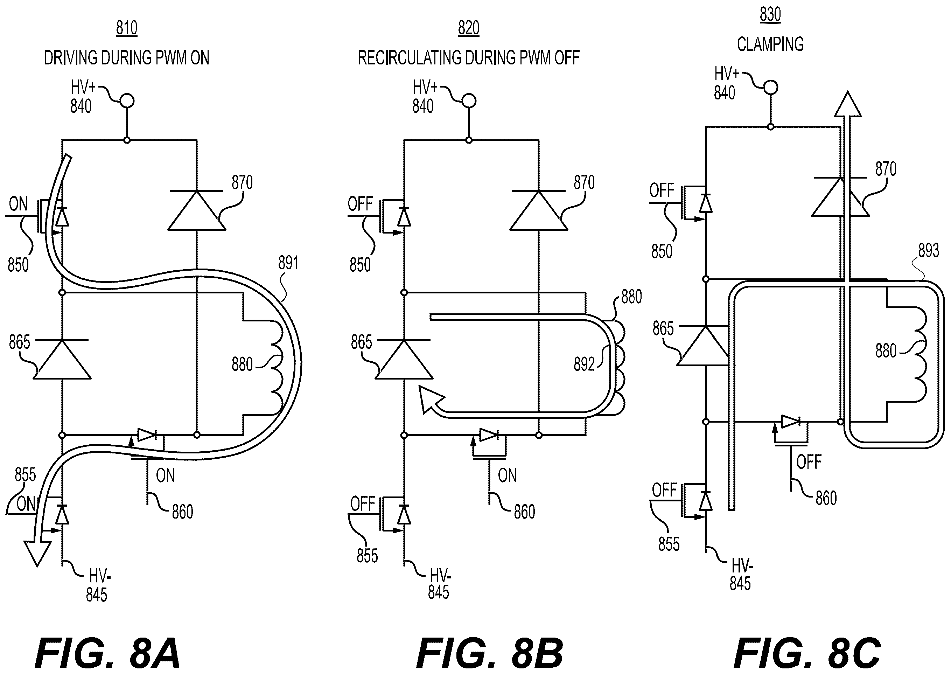

FIGS. 8A, 8B, and 8C depict an exemplary current path, according to one or more embodiments. The exemplary current path described herein may relate to a current path in the symmetric buck circuit 710 as described above with respect to FIG. 7A. FIG. 8A illustrates a symmetric buck circuit 810. The symmetric buck circuit 810 may be substantially similar to the symmetric buck circuit 710 as described above with respect to FIG. 7A. However, the symmetric buck circuit 810 may include additional details described herein. The symmetric buck circuit 810 may include a first switch 850, a first diode 865, a second switch 855, rotor winding 880, a positive voltage node 840, a negative voltage node 845, a second diode 870, and a third switch 860. The first switch 850, the first diode 865, and the second switch 855 may be substantially similar to the first switch 420, the diode 430, and the second switch 425 of the symmetric buck circuit 400 as described above with respect to FIG. 4.

The symmetric buck circuit 810 may selectively operate the first switch 850, the second switch 855, and the third switch 860 of the symmetric buck circuit 810 to control a current 891 in the rotor winding 880 through the first diode 865 connected to the first switch 850, the second switch 855, and the third switch 860, and through a second diode 870 connected to the first switch 850 and the third switch 860. Operating the first switch 850, the second switch 855, and the third switch 860 in the closed or "on" position may pass the current 891 from the positive voltage node 840 through the first switch 850, the rotor winding 880, the third switch 860, and the second switch 855 to the negative voltage node 845 during a PWM on pulse.

FIG. 8B illustrates a symmetric buck circuit 820. The symmetric buck circuit 820 may be substantially similar to the symmetric buck circuit 810 as described above with respect to FIG. 8A. However, the symmetric buck circuit 820 may include additional details described herein. The symmetric buck circuit 820 may include the first switch 850, the first diode 865, the second switch 855, the rotor winding 880, the positive voltage node 840, the negative voltage node 845, the second diode 870, and the third switch 860.

The symmetric buck circuit 820 may operate the first switch 850, the second switch 855, and the third switch 860 of the symmetric buck circuit 820 to control a current 892 in the rotor winding 880 through the third switch 860 connected to the first diode 865. The symmetric buck circuit 820 may operate the first switch 850, the second switch 855 in the open or the "off" position and the third switch 860 to be closed or in the "on" position, to circulate the current 892 through the rotor winding 880, the third switch 860, and the first diode 865 during a PWM off pulse.

FIG. 8C illustrates a symmetric buck circuit 830. The symmetric buck circuit 830 may be substantially similar to the symmetric buck circuit 810 as described above with respect to FIG. 8A. However, the symmetric buck circuit 830 may include additional details described herein. The symmetric buck circuit 830 may include the first switch 850, the first diode 865, the second switch 855, the rotor winding 880, the positive voltage node 840, the negative voltage node 845, the second diode 870, and the third switch 860.

The symmetric buck circuit 830 may operate the first switch 850, the second switch 855, and the third switch 860 of the symmetric buck circuit 830 to control a current 893 to pass from the negative voltage node 845 through the second switch 855, the first diode 865, the rotor winding 880, and the second diode 870 to the positive voltage node 840. The symmetric buck circuit 830 may operate the first switch 850, the second switch 855, and the third switch 860 in the open or the "off" position during a clamping operation.

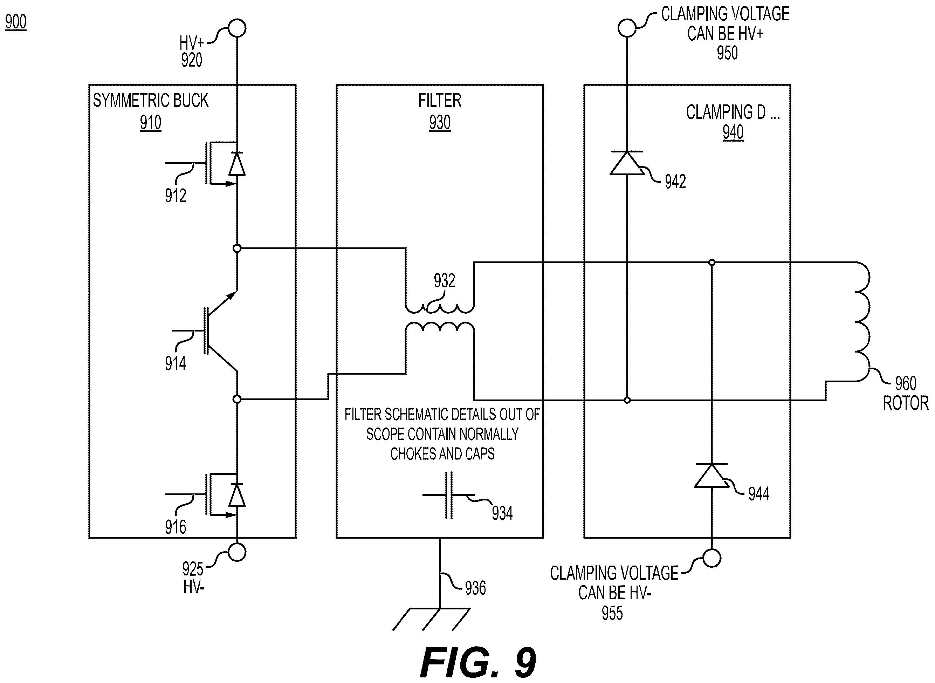

FIG. 9 depicts an exemplary circuit diagram with a separate clamp and filter, according to one or more embodiments. Circuit diagram 900 may include a symmetric buck circuit 910, a positive voltage node 920, a negative voltage node 925, a filter 930, a ground 936, a clamping component 940, a positive clamping voltage node 950, a negative clamping voltage node 955, and a rotor 960. The symmetric buck circuit 910 may be substantially similar to the symmetric buck circuit 400 as described above with respect to FIG. 4. However, the symmetric buck circuit 910 may include additional details described herein. The symmetric buck circuit 910 may include a first switch 912, a second switch 916, and a third switch 914. The first switch 912 and the second switch 916 may be substantially similar to the first switch 420 and the second switch 425 of the symmetric buck circuit 400 as described above with respect to FIG. 4. The third switch 914 may be substantially similar to the first diode 704 as described in FIG. 7E.

The first switch 912 may include a first connection and a second connection, the first connection of the first switch 912 may be connected to the positive voltage node 920. The second switch 916 may include a first connection and a second connection, wherein the first connection of the second switch 916 may be connected to the negative voltage node 925. The third switch 914 may include a first connection and a second connection, wherein the first connection of the third switch 914 may be connected to the second connection of the first switch 912 and the second connection of the third switch 914 may be connected to second connection of the second switch 916. The first switch 912, the second switch 916, and the third switch 914 may include field-effect transistors (FET) or insulated-gate bipolar transistors.

The filter 930 may include a transformer 932, one or more capacitors 934, and a ground 936. The transformer 932 may include a first end and a second end, the first end of the transformer 932 may be connected to the second connection of the first switch 912 and the second end of the transformer 932 may be connected to the second connection of the second switch 916. The filter 930 may be configured to reduce an output of at least one of a nose and a ripple effect on the transformer 932. The filter 930 may include the one or more capacitors 934 to assist in reducing the noise and/or ripple effect on the transformer 932.

The clamping component 940 may include a first diode 942 and a second diode 944. The first diode 942 may include an anode and a cathode, wherein the cathode of the first diode 942 may be connected to the positive clamping voltage node 950 and the anode may be connected to a second end of the rotor 960. The second diode 944 may include an anode and a cathode, wherein the anode of the second diode 944 may be connected to the negative clamping voltage node 955 and the cathode of the second diode 944 may be connected to a first side of the rotor 960. The clamping component 940 may be configured to regulate a voltage in the power converter (e.g., circuit diagram 900).

The advantages of implementing a symmetric buck circuit for an EESM as described herein may include utilizing a PWM to control one or both transistors in a way that current recirculates during off-time through one of the transistors and a diode, alternately, both transistors may be switched at the same time. In addition, the symmetric buck circuit may be a simpler more cost-effective concept. Switching a single transistor at a time may allow for driving substantially zero voltage by the recirculating in the bridge, either through a first portion (e.g., a first transistor and a first diode) of the symmetric buck circuit or through a second portion (e.g., a second transistor and a second diode) of the symmetric buck circuit, which may yield in a lower current ripple.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A system comprising a power converter, wherein the power converter includes:
a first switch including a first connection and a second connection, wherein the first connection of the first switch is configured to be connected to a positive voltage node;
a second switch including a first connection and a second connection, wherein the first connection of the second switch is configured to be connected to a negative voltage node; and
a diode including an anode and a cathode, wherein the cathode of the diode is connected to the second connection of the first switch and the anode of the diode is connected to the second connection of the second switch;
wherein the second connection of the first switch is configured to be connected to a first end of a rotor winding, and the second connection of the second switch is configured to be connected to a second end of the rotor winding.

2. The system of claim 1, wherein the first switch and the second switch include one or more of a field-effect transistor (FET) or an insulated-gate bipolar transistor (IGBT).

3. The system of any one of claims 1 to 2, wherein the first switch and the second switch are configured to be selectively operable to remove a parasitic current on the rotor winding;
and, preferably, wherein the first switch and the second switch are configured to be selectively operable to reduce one or more of a voltage or a current delivered to a bearing.

4. The system of any one of claims 1 to 3, wherein the power converter further includes:
a recirculation circuit configured to recirculate a parasitic current in the power converter when the first switch and the second switch are both in an off position, and
a clamping circuit configured to regulate a voltage in the power converter.

5. The system of any one of claims 1 to 4, wherein the power converter further includes:
a filter circuit configured to reduce an output of one or more of a noise or a ripple effect in the power converter.

6. The system of any one of claims 1 to 5, wherein the power converter further includes:
a third switch including a first connection and a second connection, wherein the first connection of the third switch is connected to the second connection of the second switch and the second connection of the third switch is connected to the second end of the rotor winding; and
a second diode including an anode and a cathode, wherein the cathode of the second diode is connected to the positive voltage node and the anode of the second diode is connected to the second connection of the third switch.

7. The system of any one of claims 1 to 6, wherein the power converter further includes:
a third switch including a first connection and a second connection, wherein the first connection of the third switch is connected to the second connection of the second switch and the second connection of the third switch is connected to the second end of the rotor winding; and
a double ended diode including a first end and a second end, wherein the first end of the double ended diode is connected to the first end of the rotor winding and the second end of the double ended diode is connected to the second end of the rotor winding.
and/or, wherein the power converter further includes:
a third switch including a first connection and a second connection, wherein the first connection of the third switch is connected to the second connection of the second switch and the second connection of the third switch is connected to the second end of the rotor winding;
a second diode including an anode and a cathode, wherein the anode of the second diode is connected to the second end of the rotor winding; and
an energy management component including a first connection and a second connection, wherein the second connection of the energy management component is connected to the first end of the rotor winding;
wherein the second connection of the energy management component is connected to the cathode of the second diode, wherein the energy management component is configured to store a magnetic energy discharged from the rotor winding.

8. The system of any one of claims 1 to 7, wherein the power converter further includes:
a clamping component including a first end and a second end, wherein the first end of the clamping component is connected to the first end of the rotor winding and wherein the second end of the clamping component is connected to the second connection of the second switch; and
an igniter component including a first connection and a second connection, wherein the first connection of the igniter component is connected to the cathode of the diode and the second connection of the igniter component is connected to the second end of the rotor winding.
and/or, wherein the power converter further includes:
a clamping component including a first connection and a second connection, wherein the first connection of the clamping component is connected to the first end of the rotor winding and wherein the second connection of the clamping component is connected to the second end of the rotor winding.

9. The system of any one of claims 1 to 8, the system further includes:
a battery configured to supply DC power to the power converter; and
a motor configured to receive AC power from the power converter to drive the motor,
wherein the system is provided as a vehicle including the power converter, the battery, and the motor.

10. A system comprising a power converter, wherein the power converter includes:
a first switch including a first connection and a second connection, wherein the first connection of the first switch is configured to be connected to a positive voltage node;
a second switch including a first connection and a second connection, wherein the first connection of the second switch is configured to be connected to a negative voltage node; and
a third switch including a first connection and a second connection, wherein the first connection of the third switch is connected to the second connection of the first switch and the second connection of the third switch is connected to the second connection of the second switch,
wherein the second connection of the first switch is configured to be connected to a first end of a rotor winding, and the second connection of the second switch is configured to be connected to a second end of the rotor winding.

11. The system of claim 10, wherein the power converter further includes:
a filter circuit configured to reduce an output of one or more of a noise or a ripple effect on the rotor winding;
and, preferably, wherein the power converter further includes:
a clamping circuit including a first diode and a second diode, wherein the first diode includes an anode connected to a second end of a rotor and a cathode connected to a first end of the rotor, wherein the clamping circuit is configured to regulate a voltage in the power converter.

12. A method comprising:
operating a first switch of a power converter, a second switch of the power converter, and a third switch of the power converter to control a current in a rotor winding through a first diode connected to the first switch, the second switch, the third switch, and a second diode connected to the first switch and the third switch.

13. The method of claim 12, wherein the operating the first switch, the second switch, and the third switch includes:
operating the first switch, the second switch, and the third switch to be closed to pass current from a positive voltage node through the first switch, the rotor winding, the third switch, and the second switch to a negative voltage node during a Pulse Width Modulation on pulse.

14. The method of any one of claims 12 to 13, wherein the operating the first switch, the second switch, and the third switch includes:
operating the first switch and the second switch to be open, and operating the third switch to be closed, to circulate current through the rotor winding, the third switch, and the first diode during a Pulse Width Modulation off pulse.

15. The method of any one of claims 12 to 14, wherein the operating the first switch, the second switch, and the third switch includes:
operating the first switch, the second switch, and the third switch to be closed to pass current from a negative voltage node through the second switch, the first diode, the rotor winding, and the second diode to a positive voltage node;
and/or operating the first switch, the second switch, and the third switch in each of a driving operation, a recirculating operation, and a clamping operation.
